# DEMANDE DE BREVET EUROPEEN

(11) **EP 2 282 069 A1**
(43) Date de publication de la demande: **09.02.2011**
(21) Numéro de dépôt: 10168554.3
(22) Date de dépôt: 06.07.2010
(51) Int. Cl.: F16B 37/04, B62D 21/09, B62D 27/06, B62D 21/11

(54) **Renfort de fixation d'un organe, notamment du train arrière d'un véhicule automobile, plancher de véhicule comportant une traverse équipée d'un tel renfort et véhicule comportant un tel plancher**

(30) Priorité: 04.08.2009 FR 0955483
(71) Demandeur: Peugeot Citroën Automobiles SA, 78140 Vélizy-Villacoublay (FR)
(72) Inventeur: Blaise, Vincent, 25260, LOUGRES (FR); Tallet, Frédéric, 70200, MOFFANS ET VACHERESSE (FR)
(74) Mandataire: Allain, Laurent

(57) **Abrégé**

Renfort (10) de fixation d'un organe d'un véhicule automobile comprenant une tôle comportant une surface d'appui (3) apte à supporter au moins une cage de maintien d'un écrou, cette tôle comportant une ouverture (6) pour le passage d'une vis destinée à être vissée dans ledit écrou pour assurer la fixation dudit organe de véhicule, **caractérisé en ce que** ledit renfort (10) comporte une patte (11) découpée dans la tôle et pliée pour la dégager de la découpe (12), de façon qu'elle puisse constituer une butée pour ladite cage de maintien d'un écrou empêchant le déplacement de cette cage dans une direction perpendiculaire à ladite surface d'appui (3).

## Description

La présente invention concerne un renfort de fixation d'un organe d'un véhicule automobile, tel que le train arrière de ce véhicule.

L'invention concerne également un plancher arrière d'un véhicule automobile comportant une traverse équipée d'un tel renfort de fixation du train arrière et un véhicule équipé d'une telle traverse.

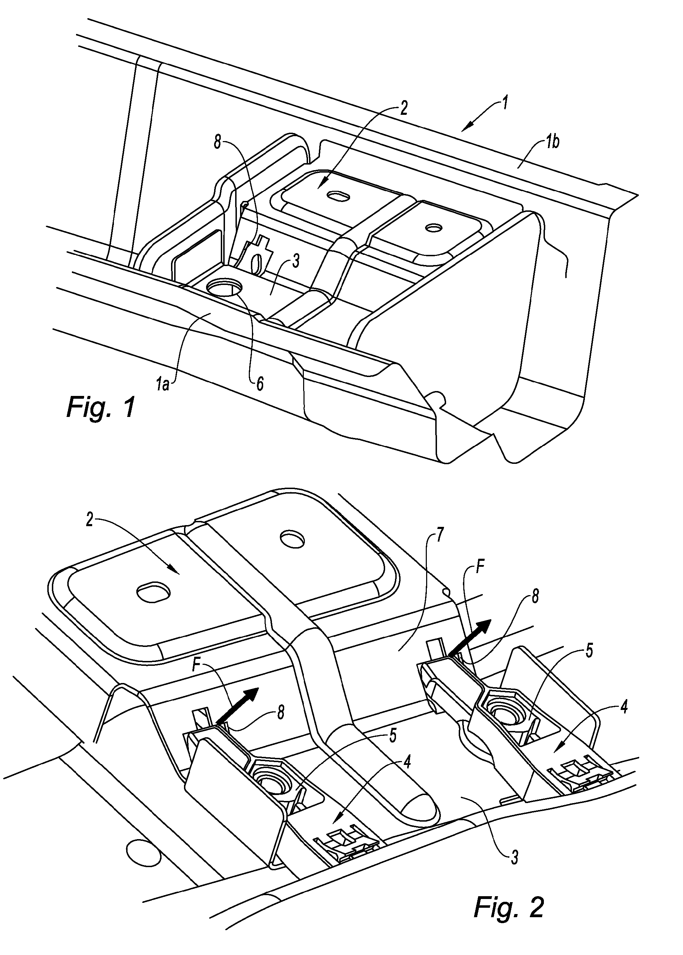

La figure 1 est une vue en perspective d'une traverse arrière 1 en tôle d'un véhicule automobile présentant une section en U et dont les bords pliés 1a et 1 b sont destinés à être soudés sous le plancher arrière du véhicule automobile.

Dans cette traverse 1 est fixé par soudure un renfort 2 de fixation du train arrière.

Ce renfort 2 est en tôle et comprend une surface d'appui 3 apte à supporter, comme montré par la vue en perspective de la figure 2, deux cages 4 de maintien d'un écrou 5.

La tôle du renfort 2 comporte sur la surface d'appui 3 deux ouvertures 6 destinées chacune au passage d'une vis (non représentée) pouvant être vissée dans l'écrou 5 correspondant pour assurer la fixation du train arrière.

Le renfort 2 comporte une partie 7 inclinée vers le haut dans laquelle sont découpées deux ouvertures 8, dans lesquelles sont engagées les extrémités des deux cages 4 de maintien d'un écrou 5, comme montré par la figure 2.

Ces deux cages 4 sont ainsi maintenues pour que l'écrou 5 de chacune d'elles soit en regard de l'ouverture 6 du renfort 1.

La matière qui est découpée dans la tôle pour réaliser les ouvertures 8 est perdue.

La figure 2 montre par les flèches F que les cages 4 ne sont pas maintenues dans une direction perpendiculaire au renfort 1.

Ainsi, lorsqu'on visse les vis dans les écrous 5 par en dessous pour fixer le train arrière, les cages 4 se soulèvent, ce qui n'est pas acceptable.

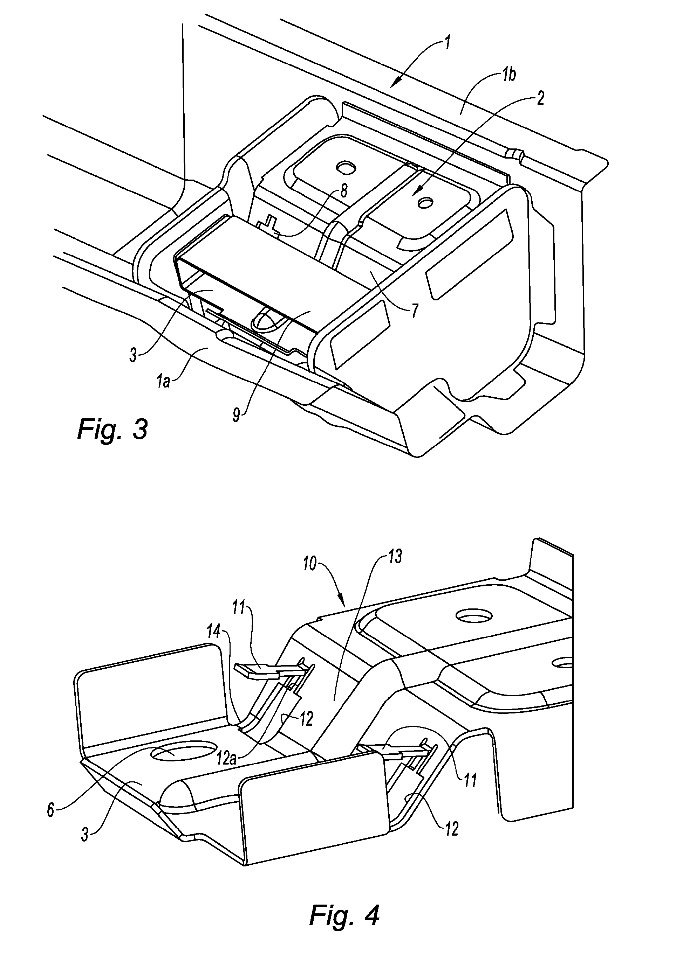

Pour éviter le soulèvement des cages 4, on est obligé de souder au-dessus de la surface d'appui 3 des cages 4, la tôle 9 représentée sur la figure 3 qui est une vue en perspective analogue à la figure 1.

Cette tôle 9 augmente les coûts de fabrication.

Le but de la présente invention est d'apporter une solution au problème évoqué ci-dessus, cette solution étant applicable aux renforts de fixation d'organes autres que le train arrière.

Ce but est atteint selon l'invention, grâce à un renfort de fixation d'un organe d'un véhicule automobile comprenant une tôle comportant une surface d'appui apte à supporter au moins une cage de maintien d'un écrou, cette tôle comportant une ouverture pour le passage d'une vis destinée à être vissée dans ledit écrou pour assurer la fixation dudit organe de véhicule, **caractérisé en ce que** ledit renfort comporte une patte découpée dans la tôle et pliée pour la dégager de la découpe, de façon qu'elle puisse constituer une butée pour ladite cage de maintien d'un écrou empêchant le déplacement de cette cage dans une direction perpendiculaire à ladite surface d'appui.

La patte découpée dans la tôle du renfort remplit ainsi la fonction de la tôle soudée 9 représentée sur la figure 3 sans entrainer les coûts de celle-ci.

De plus, cette patte est réalisée à partir d'une matière qui est perdue dans le cas de la réalisation connue décrite plus haut, ce qui augmente encore davantage l'intérêt économique de l'invention.

Dans une version préférée de l'invention, ladite tôle comporte une partie inclinée vers le haut à partir de ladite surface d'appui, ladite patte découpée dans la tôle étant située sur ladite partie inclinée et étant pliée de façon à s'étendre dans un plan sensiblement parallèle à ladite surface d'appui situé au-dessus de cette dernière.

De préférence, la distance comprise entre ledit plan et ladite surface d'appui est sensiblement égale à la hauteur de la cage de maintien de l'écrou.

La cage de maintien de l'écrou se trouve ainsi parfaitement calée entre la surface d'appui du renfort et la patte découpée.

De préférence également, l'axe longitudinal de ladite patte découpée est situé dans un plan perpendiculaire à ladite surface d'appui passant par l'axe de l'ouverture de passage de la vis.

Cette disposition confère ainsi à la patte découpée une position optimale au-dessus de l'ouverture de passage de la vis et de la cage de l'écrou calée entre cette ouverture et la patte découpée.

Dans un mode de réalisation avantageux, la découpe portant ladite patte découpée s'étend à partir du pli réalisé entre ladite surface d'appui et la partie inclinée de la tôle.

De préférence, les dimensions de ladite découpe sont suffisantes pour permettre le passage d'une extrémité de la cage de maintien de l'écrou, ce qui permet de caler cette cage dans une direction parallèle à la surface d'appui de cette cage sur le renfort.

Dans un mode de réalisation, la découpe portant ladite patte découpée présente un rétrécissement dans la zone de son raccordement avec ladite patte découpée.

Ce rétrécissement permet de réduire la largeur de la patte découpée dans sa zone de raccordement avec la découpe, ce qui facilite le pliage de cette patte.

Dans un mode de réalisation préféré, le renfort comporte deux pattes découpées dans la tôle pour constituer chacune une butée pour une cage de maintien d'un écrou.

Selon un autre aspect, l'invention concerne également un plancher arrière d'un véhicule automobile sous lequel est soudé une traverse en tôle de section sensiblement en U, cette traverse comportant de chaque côté un renfort de fixation du train arrière, selon l'invention.

L'invention concerne également un véhicule automobile comportant un tel plancher arrière.

D'autres particularités et avantages de l'invention apparaîtront encore tout au long de la description ci-après.

Aux dessins annexés, donnés à titre d'exemples, non limitatifs :
- la figure 4 est une vue en perspective d'un renfort de fixation d'un train arrière de véhicule automobile, selon l'invention.

La figure 4 représente un renfort de fixation 10 du train arrière d'un véhicule automobile comprenant, comme dans le cas des figures 1 à 3, une tôle comportant une surface d'appui 3 apte à supporter deux cages de maintien 4 d'un écrou 5, telles que celles représentées sur la figure 2.

La tôle du renfort 10 comprend, comme dans le cas de la figure 1, une ouverture 6 pour le passage d'une vis destinée à être vissée dans l'écrou 5 de la cage 4 pour assurer la fixation du train arrière du véhicule.

Conformément à l'invention, ledit renfort 10 comporte une patte 11 découpée dans la tôle et pliée pour la dégager de la découpe 12, de façon qu'elle puisse constituer une butée pour la cage 4 de maintien d'un écrou 5 empêchant le déplacement de cette cage 4 dans une direction perpendiculaire à la surface d'appui 3.

La figure 4 montre que la tôle du renfort 10 comporte une partie 13 inclinée vers le haut à partir de la surface d'appui 3.

La patte 11 découpée dans la tôle est située sur la partie inclinée 13 et est pliée de façon à s'étendre dans un plan sensiblement parallèle à la surface d'appui 3 situé au-dessus de cette dernière.

La distance comprise entre le plan de la patte 11 et la surface d'appui 3 du renfort 10 est sensiblement égale à la hauteur de la cage 4 de maintien de l'écrou 5, représentée sur la figure 2.

Ainsi, lorsque cette cage 5 est en position au-dessus de l'ouverture 6, la patte 11 forme au-dessus de la cage 5 une butée qui l'empêche de se soulever.

L'axe longitudinal de la patte découpée 11 est situé dans un plan perpendiculaire à la surface d'appui 3 du renfort 10, passant par l'axe de l'ouverture 6 de passage de la vis destinée à être vissée dans l'écrou 5.

La figure 4 montre d'autre part que la découpe 12 portant la patte découpée 11 s'étend vers le haut à partir du pli 14 réalisé entre la surface d'appui 3 et la partie inclinée 13 de la tôle du renfort 10.

Les dimensions de la découpe 12 sont suffisantes pour permettre le passage d'une extrémité de la cage 4 de maintien de l'écrou 5, ce qui permet de caler celle-ci dans une direction parallèle à la surface d'appui 3.

Par ailleurs, la découpe 12 portant la patte découpée 11 présente un rétrécissement 12a dans la zone de son raccordement avec la patte découpée 11.

Ce rétrécissement 12a a pour effet de réduire la largeur de la patte 11 dans la zone ci-dessus pour faciliter son pliage.

Dans l'exemple représenté sur la figure 4, le renfort 10 comprend deux pattes 11 découpées dans la tôle pour constituer chacune une butée supérieure pour une cage 4 de maintien d'un écrou 5.

Le renfort 10 de fixation du train arrière d'un véhicule automobile, décrit ci-dessus présente les avantages suivants :
- il permet d'éviter le soudage d'une tôle telle que la tôle 9 représentée sur la figure 3 qui grève les coûts de fabrication, et
- il permet, grâce aux pattes découpées 11, de valoriser de la matière découpée dans la tôle qui constitue une chute perdue dans la réalisation représentée sur les figures 1 à 3.

Bien entendu, l'invention peut s'appliquer à d'autres renforts que les renforts de fixation du train arrière de véhicules automobiles.

Ainsi, l'invention pourrait s'appliquer à des renforts de fixation du berceau du moteur d'un véhicule automobile.

## Revendications

1. Renfort (10) de fixation d'un organe d'un véhicule automobile comprenant une tôle comportant une surface d'appui (3) apte à supporter au moins une cage (4) de maintien d'un écrou (5), cette tôle comportant une ouverture (6) pour le passage d'une vis destinée à être vissée dans ledit écrou (5) pour assurer la fixation dudit organe de véhicule, **caractérisé en ce que** ledit renfort (10) comporte une patte (11) découpée dans la tôle et pliée pour la dégager de la découpe (12), de façon qu'elle puisse constituer une butée pour ladite cage (4) de maintien d'un écrou (5) empêchant le déplacement de cette cage (4) dans une direction perpendiculaire à ladite surface d'appui (3).

2. Renfort de fixation selon la revendication 1, **caractérisé en ce que** ladite tôle comporte une partie inclinée (13) vers le haut à partir de ladite surface d'appui (3), ladite patte (11) découpée dans la tôle étant située sur ladite partie inclinée (13) et étant pliée de façon à s'étendre dans un plan sensiblement parallèle à ladite surface d'appui (3) situé au-dessus de cette dernière.

3. Renfort de fixation selon la revendication 2, **caractérisé en ce que** la distance comprise entre ledit plan et ladite surface d'appui (3) est sensiblement égale à la hauteur de la cage (4) de maintien de l'écrou (5).

4. Renfort de fixation selon l'une des revendications 2 à 3, **caractérisé en ce que** l'axe longitudinal de ladite patte découpée (11) est situé dans un plan perpendiculaire à ladite surface d'appui (3) passant par l'axe de l'ouverture (6) de passage de la vis.

5. Renfort de fixation selon l'une des revendications 2 à 4, **caractérisé en ce que** la découpe (12) portant ladite patte découpée (11) s'étend à partir du pli (14) réalisé entre ladite surface d'appui (3) et la partie inclinée (13) de la tôle.

6. Renfort de fixation selon la revendication 5, **caractérisé en ce que** les dimensions de ladite découpe (12) sont suffisantes pour permettre le passage d'une extrémité de la cage (4) de maintien de l'écrou (5).

7. Renfort de fixation selon l'une des revendications 2 à 6, **caractérisé en ce que** la découpe (12) portant ladite patte découpée (11) présente un rétrécissement (12a) dans la zone de son raccordement avec ladite patte découpée (11).

8. Renfort de fixation selon l'une des revendications 1 à 7, **caractérisé en ce qu'**il comporte deux pattes (11) découpées dans la tôle pour constituer chacune une butée pour une cage (4) de maintien d'un écrou (5).

9. Plancher arrière d'un véhicule automobile sous lequel est soudé une traverse en tôle de section sensiblement en U, cette traverse comportant de chaque côté un renfort (10) de fixation du train arrière selon l'une des revendications 1 à 8.

10. véhicule automobile comportant un plancher arrière selon la revendication 9.
